# EUROPÄISCHE PATENTANMELDUNG

(11) **EP 4 620 316 A1**
(43) Veröffentlichungstag der Anmeldung: **24.09.2025**
(21) Anmeldenummer: 24164481.4
(22) Anmeldetag: 19.03.2024
(51) Int. Cl.: A23P 30/25, A22C 7/00

(54) **VORRICHTUNG UND VERFAHREN ZUM HERSTELLEN VON STRUKTURIERTEN LEBENSMITTELN, INSBESONDERE FLEISCHERSATZPRODUKTEN**

(71) Anmelder: Albert Handtmann Maschinenfabrik GmbH & Co. KG, 88400 Biberach (DE)
(72) Erfinder: KAMMERER, Steffen, 88214 Ravensburg (DE); HEMRICH, Leo, 97237 Altertheim (DE)
(74) Vertreter: Grünecker Patent- und Rechtsanwälte PartG mbB

(57) **Zusammenfassung**

Die Erfindung betrifft eine Vorrichtung und ein Verfahren zum Herstellen von strukturierten Lebensmitteln, insbesondere Fleischprodukte und / oder Fleischersatzprodukte, wobei die Vorrichtung ein Gehäuse aufweist mit einem Einlass für einen Grundmassestrom und einem Auslass für das strukturierte Lebensmittel und mit einer Strukturiereinrichtung zum Erzeugen einer definierten Struktur einer Zusatzmasse in der Grundmasse, wobei die Strukturiereinrichtung umfasst: einen ersten Abschnitt, mit mindestens einer Öffnung für den Grundmassestrom zur Erzeugung mindestens eines Grundmassestrangs, einen zweiten Abschnitt mit mehreren Kanälen, die mit Zuläufen für jeweilige Zusatzmasseströme verbunden sind, die insbesondere um den Umfang des Gehäuses verteilt sind und den Zusatzmassestrom an eine jeweilige vorbestimmte Position des Gehäusequerschnitts leiten und einen dritten Abschnitt mit mehreren Auslassöffnungen, die in Verbindung mit jeweiligen Kanälen stehen, um mehrere Zusatzmassestränge zu erzeugen.

## Beschreibung

Die Erfindung betrifft eine Vorrichtung und ein Verfahren zum Herstellen von strukturierten Lebensmitteln gemäß den Ansprüchen 1 und 13.

Bei der Herstellung von Fleischersatzprodukten oder einer Kombination von tierischen und nichttierischen z.B. pflanzlichen Produkten werden pastöse, pflanzliche, oft mit Fasern versetzte Massen entweder händisch oder maschinell in Form gebracht und auch entsprechende Strukturen eingebracht. Diese Produkte werden in ihrer Außengeometrie, aber auch ihrem Querschnitt möglichst realitätsgetreu einem tierischen Vergleichsprodukt nachempfunden. Diese Vergleichsprodukte weisen neben dem roten Muskelfleisch ebenfalls deutlich sichtbare Fettstrukturen auf.

Diese Fettstrukturen liegen zum einen innerhalb (intramuskuläre Feinmarmorierung), zum anderen aber auch in größeren, definierten Strukturen zwischen den Muskelsträngen vor (Grobstrukturierung). Diese groben Strukturen prägen das Bild eines Fleischersatzproduktes maßgeblich und sind unerlässlich, um tierische Vergleichsprodukte realitätstreu zu imitieren.

Die definierten Fettstrukturen repräsentieren bestimmte Teilstücke eines Tieres, z.B. Rumpsteak, Hüfte, Hochrippe, etc. Dabei gilt es die Form, die Stärke, den prozentualen Fettanteil, und damit die gesamte Fleischstruktur nachzuempfinden.

Es werden im Stand der Technik bereits sogenannte Koextrusionsverfahren verwendet, über die gleichzeitig eine Innen- und eine Außenmasse extrudiert werden kann, um beispielsweise Wurstprodukte mit Käsefüllung oder veganen Bacon herzustellen.

Die bekannten Koextrusionseinrichtungen bringen den Nachteil mit sich, dass keine exakt definierten Strukturen und insbesondere auch keine feinen Strukturen erzeugt werden können. Anwendungen bekannter Koextrusionsdüsen eignen sich vor allem für die Monoproduktion ganz bestimmter Produkte bei gleichzeitig definierter Beschaffenheit der zu extrudierenden Medien. Eine flexible Anpassung von Strukturen ist nicht möglich.

Hiervon ausgehend liegt der vorliegenden Erfindung die Aufgabe zugrunde, eine verbesserte Vorrichtung und ein verbessertes Verfahren bereitzustellen, die auf einfache, kontinuierliche und flexible Art und Weise ermöglichen, grobe und feine Strukturen in einem Lebensmittel zu erzeugen.

Erfindungsgemäß wird diese Aufgabe durch die Merkmale der Ansprüche 1 und 13 gelöst.

Gemäß der vorliegenden Erfindung weist die Vorrichtung zum Herstellen von strukturierten Lebensmitteln ein Gehäuse mit einem Einlass für einen Grundmassestrom und einem Auslass für das strukturierte Lebensmittel auf.

Das Gehäuse kann dann z.B. über den Einlass mit dem Auslass einer Füllmaschine oder einer anderen Fördereinrichtung verbunden werden. Das Gehäuse weist eine Strukturiereinrichtung zum Erzeugen einer definierten Struktur einer Zusatzmasse in der Grundmasse auf. Dazu umfasst die Strukturiereinrichtung einen ersten Abschnitt mit mindestens einer Öffnung für den Grundmassestrom zur Erzeugung mindestens eines Grundmassestrangs. Das heißt, dass der Grundmassestrom entweder als Einzelstrom belassen wird oder aber in mehrere Teilströme unterteilt wird, derart, dass mehrere Grundmassestränge erzeugt werden, die im Querschnitt des Gehäuses betrachtet, voneinander beabstandet sind.

Weiter weist die Strukturiereinrichtung einen zweiten Abschnitt mit mehreren Kanälen auf, die mit Zuläufen für jeweilige Zusatzmasseströme verbunden sind. Dabei sind die Zuläufe insbesondere um den Umfang des Gehäuses herum verteilt angeordnet. So kann der Zusatzmassestrom an jeweilige vorbestimmte Positionen des Gehäusequerschnitts über die Kanäle geleitet werden. Diese Positionen befinden sich außerhalb des Grundmassestrangs oder der Grundmassestränge.

Weiter umfasst die Strukturiereinrichtung einen dritten Abschnitt mit mehreren Auslassöffnungen, die in Verbindung mit jeweiligen Kanälen stehen, um mehrere Zusatzmassestränge zu erzeugen. Das heißt, dass die Zusatzmasse über die vorbestimmten Positionen über die jeweiligen Auslassöffnungen austritt und die jeweiligen Zusatzmassestränge erzeugt. Die Auslassöffnungen liegen vorzugsweise in einer Ebene, die sich senkrecht zur Strömungsrichtung in der Strukturiereinrichtung erstreckt. Es gibt also im Gehäuse mehrere Einzelstränge aus Grundmasse und Zusatzmasse, die sich aneinanderlegen können, um so das strukturierte Fleischersatzprodukt zu bilden. Sowohl der erzeugte Grundmassestrang als auch die Zusatzmassestränge bewegen sich in Strömungsrichtung, d.h. in Richtung Auslass des Gehäuses. Durch Wahl der Positionen der Kanäle sowie der Auslassöffnungen und der Position der Öffnung oder der Öffnungen für den Grundmassestrom kann eine beliebige Struktur auf einfache Art und Weise erzeugt werden. Eine entsprechende Vorrichtung ist robust, einfach und kostengünstig zu fertigen.

Gemäß einem bevorzugten Ausführungsbeispiel ist ein vierter Abschnitt mit mehreren Öffnungen vorgesehen, über den die Zusatzmassestränge rekombiniert werden können, so dass eine definierte Gesamtstruktur entsteht. Je nach Produkt kann auf die Verwendung eines vierten Abschnitts auch verzichtet werden.

Gemäß einer bevorzugten Ausführungsform weist das Gehäuse nach der Strukturiereinrichtung, also insbesondere nach dem dritten oder vierten Abschnitt eine Extrusionsführung auf, in der sich die Grund- und Zusatzmassestränge aneinanderlegen, d.h., dass die Grund- und Zusatzmasse ohne Lufteinschlüsse zusammengefügt werden. Die Innenkontur der Extrusionsführung entspricht im Wesentlichen der Außenkontur des Lebensmittels. Die Kontur hat z.B. die Form eines Steaks. Die Extrusionsführung kann entweder als gerade Formstrecke mit im Wesentlichen konstanter Querschnittsfläche im Inneren ausgebildet sein oder als komprimierende Formstrecke derart, dass das Lebensmittel nach dem Austritt aus der Strukturiereinrichtung, d.h. insbesondere dem dritten oder vierten Abschnitt komprimiert wird, d.h., leicht verjüngt wird. In diesem Fall nimmt die Querschnittsfläche im Inneren der Extrusionsführung z.B. ab. Eine komprimierende Formstrecke kann zur besseren Anhaftung der unterschiedlichen Produktphasen, d.h. der Grundmasse und der Zusatzmasse, führen. Abhängig vom Produkt kann auch auf eine entsprechende Extrusionsführung verzichtet werden, insbesondere dann, wenn das Lebensmittel in eine Darmhülle, z.B. Kunstdarmhülle, extrudiert wird. Dann werden die einzelnen Stränge in der Darmhülle komprimiert. Auch eine expandierende Formstrecke ist denkbar um gegebenenfalls den Druck im Produkt zu reduzieren.

Das extrudierte Lebensmittel kann anschließend einem Förderband, einer Abfüllvorrichtung für Kunstdarmhüllen oder einem Portioniersystem übergeben werden. Auch ein händisches Portionieren und Entnehmen ist möglich. Das Lebensmittel kann dann auch beispielsweise in einzelne Scheiben geschnitten werden.

Gemäß einem bevorzugten Ausführungsbeispiel sind die Abschnitte in Form von mehreren aneinander liegenden, in Strömungsrichtung hintereinanderliegend angeordneten Platten ausgebildet. Dabei kann jeder Abschnitt in einer eigenen Platte realisiert sein oder aber auch mehrere Abschnitte in einer Platte integriert sein, z.B. der erste und zweite Abschnitt in einer Platte oder der zweite und dritte Abschnitt in einer Platte. Alternativ dazu kann statt der einzelnen Platten ein einzelnes, beispielsweise 3D-gedrucktes Bauteil als Strukturiereinrichtung, mit den innenliegenden Kanälen und Öffnungen für den mindestens einen Grundmassestrom sowie für die mehreren Zusatzmasseströmen verwendet werden.

Der Einsatz von mehreren Platten ist aber besonders vorteilhaft, da über den Plattenaufbau kundenspezifische Strukturwünsche mit simplen Bauteilen kostengünstig realisiert werden können. Dazu sind die Platten vorzugsweise austauschbar im Gehäuse angeordnet. Somit können auf einfache Art und Weise kundenspezifische Lösungen realisiert werden, ohne große Umbaumaßnahmen. Somit können neue Strukturen durch alleiniges Austauschen weniger Komponenten erzeugt werden. Die Positionen der Zuläufe der Zusatzmasse bleiben dabei gleich.

Gemäß einem bevorzugten Ausführungsbeispiel kann der erste Abschnitt als eine Matrizenplatte ausgebildet sein, die die mindestens eine Öffnung für den Grundmassestrom aufweist, so dass der mindestens eine Grundmassestrang erzeugt werden kann. Der zweite Abschnitt kann als sogenannte Leiterplatte ausgebildet sein, die mindestens eine Öffnung für den in der Matrizenplatte erzeugten Grundmassestrang aufweist, sowie die Kanäle, die den Zusatzmassestrom von den Zuläufen zu jeweiligen vorbestimmten Positionen im Plattenquerschnitt leiten. Der dritte Abschnitt kann als Auslassplatte ausgebildet sein, die mindestens eine Öffnung für den wenigstens einen erzeugten Grundmassestrang aufweist, sowie die mehreren Auslassöffnungen, die in Verbindung mit den jeweiligen Kanälen an den vorbestimmten Positionen stehen, um die Zusatzmassestränge zu erzeugen.

Optional kann ein vierter Abschnitt vorgesehen sein, der als Formplatte ausgebildet ist, die mindestens eine Öffnung für den in den vorherigen Platten erzeugten, mindestens einen Grundmassestrang aufweist, sowie mehrere Öffnungen, über die die Zusatzmassestränge kombiniert werden können. Das heißt, dass z.B. zwei oder mehrere Zusatzmassestränge zu einem Zusatzmassestrang rekombiniert werden, um so eine Struktur zu erhalten die sich länglich im Querschnitt des Lebensmittels erstreckt.

Gemäß einer bevorzugten Ausführungsform sind die Kanäle Durchbrüche, also z.B. sich zum Umfang der jeweiligen Platte erstreckende Schlitze in der Platte, insbesondere der Leiterplatte, die durch benachbarte Platten, insbesondere die Matrizenplatte und die Auslassplatte, von beiden Seiten geschlossen werden. Somit können auf einfache Art und Weise innenliegende Kanäle realisiert werden. So können auch ganz einfach sehr dünne Kanäle ausgebildet werden, wobei die Stärke der Leiterplatte z.B. in einem Bereich von 6 mm - 20 mm liegt oder z.B. eine Querschnittsfläche des jeweiligen Kanals in einem Bereich von 5 mm² bis 150mm² aufweisen.

Gemäß einer bevorzugten Ausführungsform weisen die Platten, insbesondere die Matrizenplatte, die Leiterplatte und die Auslassplatte mehrere Öffnungen zum Erzeugen mehrerer Grundmassestränge auf, wobei eine der Platten, insbesondere die Leiterplatte, Stege zwischen den Öffnungen aufweist und die Kanäle sich in den Stegen erstrecken. Somit können die Zusatzmassestrukturen sowohl außen als auch innen im fertigen Lebensmittel angeordnet sein.

Die Vorrichtung weist mindestens eine Einrichtung zum Zuführen der Zusatzmassenströme auf, z.B. eine Förderpumpe, insbesondere auch eine Förderpumpe einer Füllmaschine. Die Einrichtung zum Zuführen der Zusatzmasseströme weist vorzugsweise mindestens einen Füllstromteiler auf, der einen Zusatzmassestrom in mehrere Zusatzmasseströme in entsprechende Teilleitungen aufteilt, wobei die Teilleitungen mit den Zuläufen verbunden sind, um die multiplen innenliegenden Kanäle mit Zusatzmasse zu speisen, ohne dass unterschiedliche Strömungswiderstände den Masseaustritt aus den unterschiedlichen Auslässen beeinflussen können. Hierdurch ist die Zusatzmasse in den Kanälen mit unterschiedlichen Strömungswiderständen zwangsgeführt und weist je Kanal einen definierten über alle Kanäle hinweg gleichbleibenden Volumenstrom auf. Dadurch ist das System massenunabhängig - die Strukturinjektion wird durch unterschiedliche Fließeigenschaften und Viskositäten der verwendeten pastösen Massen nicht beeinflusst. Damit bedarf es beim Wechsel der Massen keiner Anpassungen des Systems durch den Bediener. Auf die Verwendung eines Füllstromteilers kann dann verzichtet werden, wenn die Geometrie der einzelnen Kanäle so definiert ist, dass die Strömungswiderstände über alle Kanäle hinweg nahezu identisch sind. Dies kann über eine simulative Untersuchung erreicht werden oder über entsprechende Drosselventile an oder vor den jeweiligen Zuläufen. Die Verwendung eines Füllstromteils erlaubt jedenfalls eine größere Freiheit bei der Auslegung der Kanäle und der dadurch erzeugten Strukturen.

Es ist auch möglich, dass die Vorrichtung mehrere Einrichtungen zum Zuführen unterschiedlicher Zusatzmassen zu unterschiedlichen Zuläufen aufweist. Dann kann unterschiedliches Material zugeführt werden, so dass die erzeugten Strukturen noch komplexer werden können.

Gemäß einem bevorzugten Ausführungsbeispiel werden die Platten über ein Spannelement im Gehäuse fixiert. Die Platten werden also dicht aneinandergepresst. Somit sind die Platten zueinander derart abgedichtet, dass keine zusätzliche Dichtung z.B. für die Kanäle notwendig ist.

Vorzugsweise weist das Gehäuse einen ersten Gehäuseabschnitt auf, in dem die Plattenangeordnet sind, wobei die Platten und die Extrusionsführung über das Spannelement im ersten Gehäuseabschnitt fixiert sind. Das heißt, dass sich in vorteilhafter Art und Weise die Extrusionsführung an den Gehäuseabschnitt anschließt.

Die Erfindung betrifft auch eine Füllmaschine mit einer Vorrichtung zum Herstellen von strukturierten Lebensmitteln nach mindestens einem der Ansprüche 1 bis 10, wobei die Füllmaschine einen Trichter, ein Förderwerk und einen Auslass, der mit dem Einlass der Vorrichtung verbunden ist, aufweist. Das heißt, es kann eine Füllmaschine für die Grundmasse und optional auch eine Füllmaschine für die Zusatzmasse geben.

Vorteilhafterweise ist dann das Verhältnis des Grundmassestroms zu den jeweiligen Zusatzmasseströmen einstellbar. Es ist besonders vorteilhaft wenn die Strömungsgeschwindigkeiten des oder der Grundmassestränge und der Zusatzmassestränge gleich sind, insbesondere wenn diese Stränge dann in einer Extrusionsführung zusammengeführt werden, so können zuverlässig vorbestimmte Strukturen erzeugt werden, ohne, dass sich Masse aufstaut. Es kann aber auch vorteilhaft sein, unterschiedliche Strömungsgeschwindigkeiten der beiden Massenphasen zu nutzen, um beispielsweise die Zusatzmassenstränge durch geringere Strömungsgeschwindigkeiten als die Grundmasse in die Länge zu ziehen. So können sehr filigrane, definierte Strukturen erzeugt werden.

Gemäß dem erfindungsgemäßen Verfahren zum Herstellen von strukturierten Lebensmitteln wird ein Grundmassestrom in ein Gehäuse geleitet und in dem Gehäuse in einem ersten Abschnitt mindestens ein Grundmassestrang erzeugt. Über mehrere Zuläufe, die insbesondere um den Umfang des Gehäuses verteilt sind, werden mehrere Zusatzmasseströme mehreren Kanälen in einem zweiten Abschnitt zugeleitet, wobei in einem dritten Abschnitt die Zusatzmasseströme aus den Kanälen über entsprechende Auslassöffnungen austreten, wodurch mehrere Zusatzmasseströme erzeugt werden und vorzugsweise in einem vierten Abschnitt die Zusatzmassestränge rekombiniert werden.

Gemäß einer bevorzugten Ausführungsform legen sich die erzeugten Grundmassestränge und Zusatzmassestränge nach der Strukturiereinrichtung, insbesondere nach dem dritten oder vierten Abschnitt aneinander, so dass das Lebensmittel erzeugt wird. Dazu kann insbesondere, wie zuvor beschrieben, eine Extrusionsführung vorgesehen sein.

Vorteilhafterweise sind die Abschnitte in Form von mehreren aneinander liegenden, in Strömungsrichtung hintereinander angeordneten Platten ausgebildet. Die Platten können zum Erzeugen einer bestimmten Struktur ausgetauscht werden.

Die vorliegende Erfindung wird nachfolgend anhand folgender Figuren näher erläutert.
Fig. 1 zeigt grob schematisch zwei Füllmaschinen mit einer Vorrichtung gemäß einem Ausführungsbeispiel der vorliegenden Erfindung.
Fig. 2 zeigt schematisch einen Längsschnitt durch ein Ausführungsbeispiel gemäß der vorliegenden Erfindung.
Fig. 3 zeigt eine Explosionsdarstellung des Plattenaufbaus der Strukturiereinrichtung gemäß dem in Figur 2 gezeigten Ausführungsbeispiel.
Fig. 4 zeigt schematisch jeweils einen Längsschnitt und eine Aufsicht auf die unterschiedlichen Platten gemäß dem in Figur 2 und 3 gezeigtem Ausführungsbeispiel.
Fig. 5 zeigt die Draufsicht auf die erfindungsgemäße Vorrichtung bei Austritt der Grundmassestränge und Zusatzmassenstränge vor Eintritt in die Extrusionsführung gemäß dem in den Figuren 2-4 gezeigten Ausführungsbeispiel.
Fig. 6 zeigt einen Schnitt des in Figuren 2-5 gezeigten Ausführungsbeispiels in perspektivischer Darstellung.
Fig.7 zeigt das mit dem zuvor beschriebenen Ausführungsbeispiel erzeugte Lebensmittel.

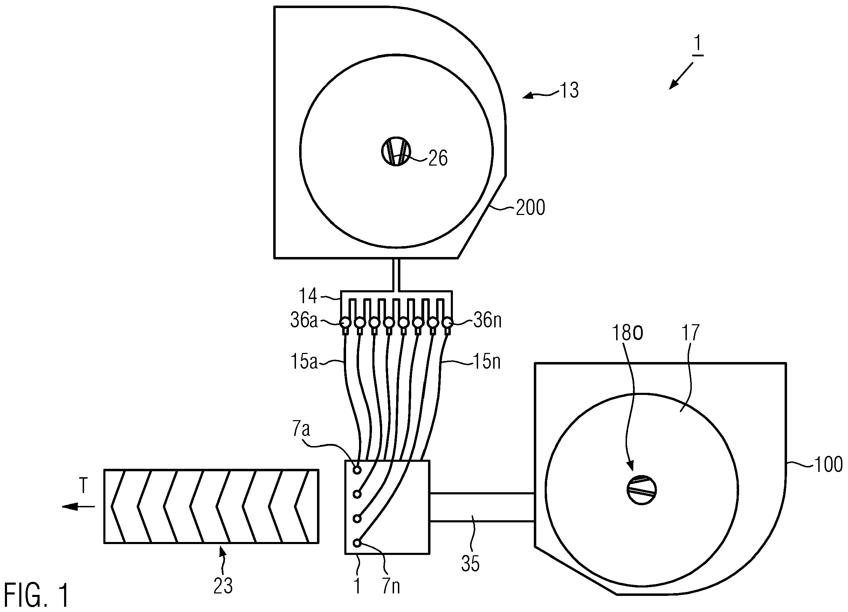

Fig. 1 zeigt schematisch zwei Füllmaschinen 100, 13 mit einer Vorrichtung 1 zum Herstellen von strukturierten Lebensmitteln, insbesondere Fleischersatzprodukten. Mit der Vorrichtung 1 ist es möglich, strukturierte Lebensmittel 2 herzustellen, insbesondere Fleischersatzprodukte. Diese Produkte werden in ihrer Außengeometrie, aber auch ihrem Querschnitt möglichst realitätsgetreu dem tierischen Vergleichsprodukt nachempfunden. Diese Vergleichsprodukte weisen neben dem roten Muskelfleisch ebenfalls deutlich sichtbare Fettstrukturen auf. Fig. 7 zeigt schematisch die Struktur eines solchen Fleischersatzproduktes mit einer Grundmasse 5, die dem Muskelfleisch entspricht und einer Zusatzmasse 6, die einer Fettstruktur entspricht.

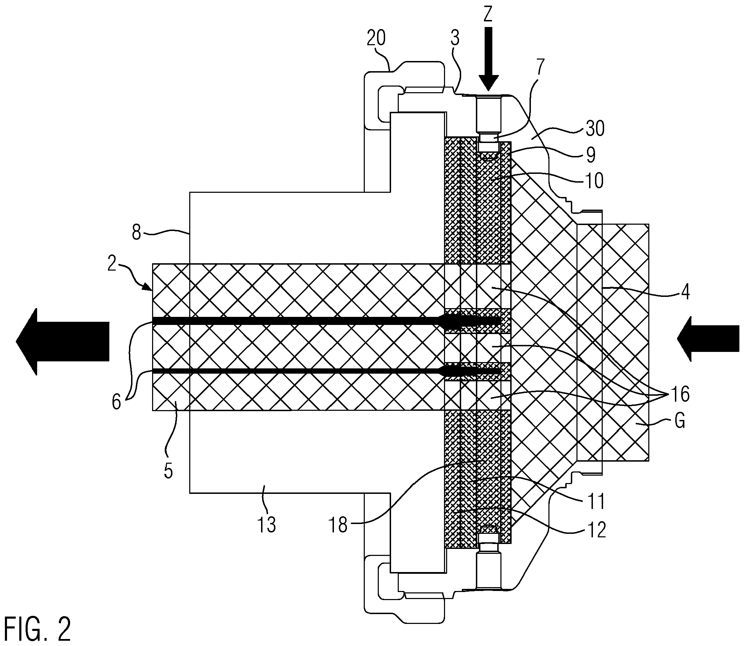

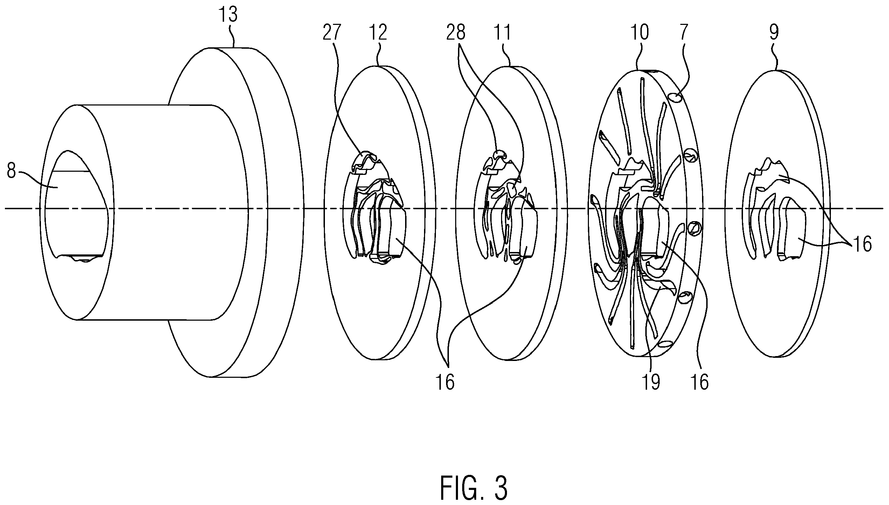

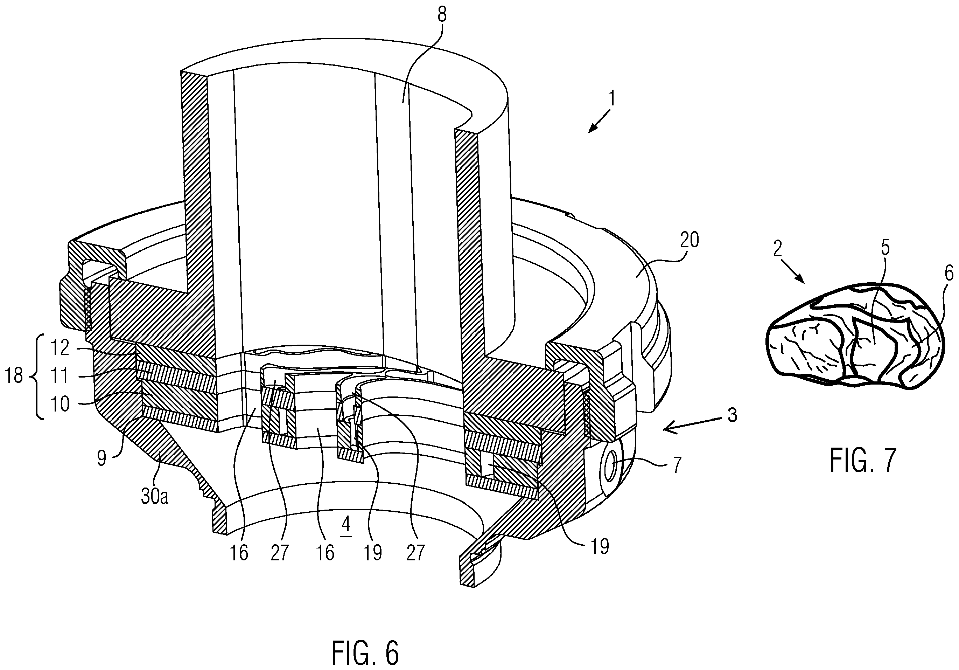

Dazu weist die Vorrichtung ein Gehäuse 3 auf mit einem Einlass 4 für einen Grundmassestrom G, der beispielsweise von der Füllmaschine 100, wie sie in Fig. 1 gezeigt ist, erzeugt wird. Ferner weist das Gehäuse einen Auslass 8 für das strukturierte Lebensmittel 2 auf, d.h., die Grundmasse 5, in die eine Zusatzmasse 6 eingebracht wurde. Im Gehäuse 3 befindet sich eine Strukturiereinrichtung 18 zum Erzeugen der definierten Struktur der Zusatzmasse 6 in der Grundmasse 5. Dazu weist die Struktureinrichtung 18 einen ersten Abschnitt 9 auf mit mindestens einer Öffnung 16 für den Grundmassestrom G, der in Fig. 2 schraffiert dargestellt ist. Der erste Abschnitt 9 ist in diesem Ausführungsbeispiel als Platte, insbesondere als Matrizenplatte 9, ausgebildet, wie auch aus den Fig. 3, 4 und 6 hervorgeht. Die Matrizenplatte 9 weist die mindestens eine Öffnung, hier mehrere, insbesondere hier drei Öffnungen 16, auf, durch die der Grundmassestrom G gedrückt wird, um mindestens einen Grundmassestrang 5, bei diesem Ausführungsbeispiel z.B. drei Grundmassestränge zu erzeugen. In Fig. 6 erkennt man die drei Grundmasseströme nach Passieren der Strukturiereinrichtung 16. Die Querschnittsfläche einer Öffnung für den Grundmassestrom liegt z.B. in einem Bereich von 3 - 400 cm².

Ferner weist die Vorrichtung einen zweiten Abschnitt 10 auf, hier z.B. in Form einer Platte, insbesondere der Leiterplatte 10, die an der Matrizenplatte 9 dicht anliegt. Der zweite Abschnitt weist mehrere Kanäle 19 auf, die mit Zuläufen 7 für jeweilige Zusatzmasseströme Z verbunden sind. Die Zuläufe 7 sind insbesondere um den Umfang der Leiterplatte 10 und um den Umfang des Gehäuses verteilt angeordnet. wie insbesondere aus Fig. 6 und Fig. 3 hervorgeht Der Zusatzmassestrom kann beispielsweise, wie nachfolgend noch erläutert wird, von einer Zuführvorrichtung, insbesondere der Füllmaschine 13, zugeführt werden. Die Kanäle 19 können den jeweiligen Zusatzmassestrom nach innen an eine jeweilige vorbestimmte Stelle des Gehäusequerschnitts leiten, wie insbesondere aus Fig. 2 hervorgeht, aber auch aus den Fig. 3, 4 und 6.

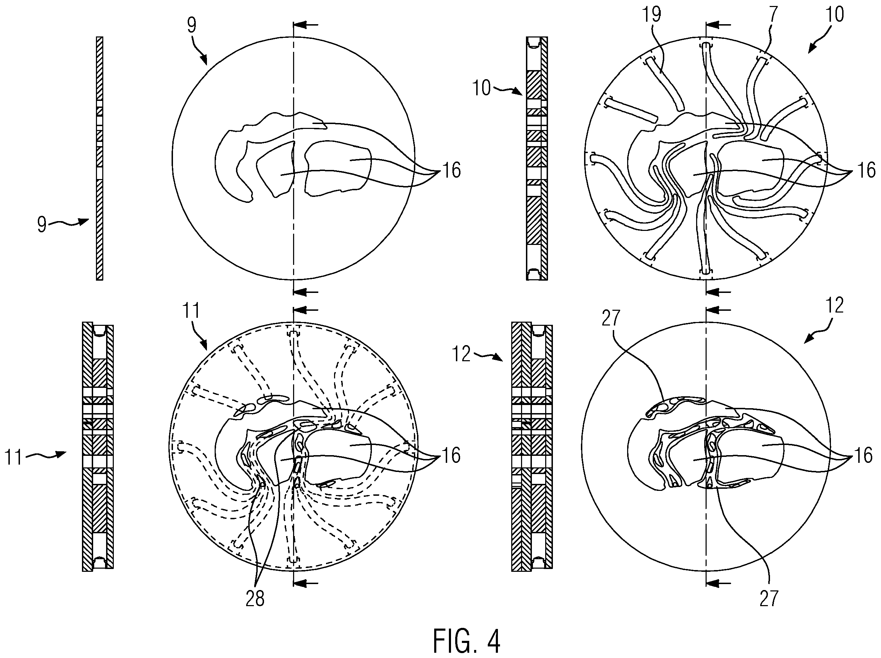

Die Kanäle 19 sind als Durchbrüche bzw. Schlitze in der Leiterplatte 10 ausgebildet und können einen sich erweiternden Abschnitt am äußeren Ende für einen Zulaufanschluss aufweisen. Die Querschnittsfläche eines Kanals 19 liegt beispielsweise in einem Bereich von 5 mm² bis 150 mm². Zwischen den Öffnungen 16 sind Stege ausgebildet, wobei sich die Kanäle 19 bis in die Stege hinein erstrecken, wie insbesondere aus den Fig. 3 und 4 hervorgeht. Weiter weist die Leiterplatte 10 ebenfalls die Öffnungen 16 auf, die vorzugsweise deckungsgleich zu den Öffnungen 16 in der Matrizenplatte 9 sind. Die Position, an der die Zusatzmasse zugeführt wird, kann zwischen den einzelnen Grundmassesträngen liegen, aber auch in der äußeren Randregion des gesamten extrudierten Lebensmittels 2.

Weiter umfasst die Strukturiereinrichtung 16 einen dritten Abschnitt 11, insbesondere in Form einer Auslassplatte 11 mit mehreren Auslassöffnungen 28, wie insbesondere beispielsweise in den Fig. 3 und 4 erkannt werden kann. Diese Auslassöffnungen 28 stehen in Verbindung mit den jeweiligen Kanälen 19 an den vorbesti^{mm}ten Positionen. So können Zusatzmassestränge 6 erzeugt werden, die sich ebenfalls in Strömungsrichtung bewegen. Weiter weist der dritte Abschnitt bzw. die Auslassplatte 11 auch die mindestens eine Öffnung 16 für den wenigstens einen in den vorherigen Platten erzeugten Grundmassestrang auf.

Durch die Auslassöffnungen der Auslassplatte 11 kann die längliche Erstreckung der Zusatzmasse im Querschnitt des Lebensmittels definiert erzeugt werden.

Die Auslassplatte 11 und die Matrizenplatte 9 liegen jeweils dicht an der Leiterplatte 10 an, derart, dass die Kanäle abgedichtet werden, wie insbesondere auch in der Fig. 6 erkannt werden kann.

Optional ist ein vierter Abschnitt, insbesondere eine Formplatte 12, vorgesehen, die ebenfalls mindestens eine Öffnung16 für den in den vorherigen Platten erzeugten mindestens einen Grundmassestrang G aufweist, sowie mehrere Öffnungen 27, über die die Zusatzmassestränge 6 rekombiniert werden können, um somit größere zusammenhängende Bereiche zu erzeugen.

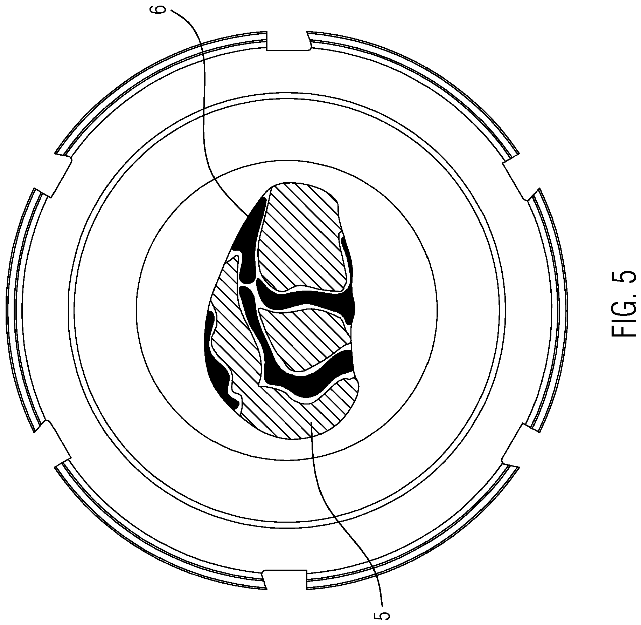

Fig. 5 zeigt die Draufsicht auf die extrudierten Grundmassestränge 5 und Zusatzmassestränge 6 nach Verlassen der Strukturiereinrichtung 18, d.h. hier z.B. eines dritten oder vierten Abschnitts bzw. nach Verlassen der Auslassplatte 11 oder der Formplatte 12. Wie z.B. bei diesem Ausführungsbeispiel erkannt werden kann, gibt es noch Hohlräume zwischen den Grundmassesträngen 5 und den Zusatzmassesträngen 6. In Abhängigkeit der Weiterverarbeitung des extrudierten Lebensmittels 2 kann dann gemäß einer bevorzugten Ausführungsform in Strömungsrichtung betrachtet das Gehäuse 3 nach der Strukturiereinrichtung, insbesondere nach dem dritten oder vierten Abschnitt eine Extrusionsführung 13 aufweisen, in der sich die Grund- und Zusatzmassestränge ohne Lufteinschlüsse aneinanderlegen können, wie in den Figuren 2,3 und 6 gezeigt ist. Die Innenkontur der Extrusionsführung 13 entspricht im Wesentlichen der Außenkontur des Lebensmittels 2. Die Extrusionsführung 13 ist entweder als gerade Formstrecke mit im Wesentlichen konstanter Querschnittsfläche ausgebildet oder als komprimierende Formstrecke, derart, dass das Lebensmittel vom Austritt aus der Strukturiereinrichtung, d.h. hier z.B. dem dritten oder vierten Abschnitt komprimiert und somit verfestigt wird. Auch eine Expansion der Formstrecke ist möglich.

Fig. 6 zeigt die Vorrichtung 1 in zusammengebautem Zustand, wobei hier deutlich erkannt werden kann, dass die einzelnen Platten 9, 10, 11, 12 flach aufeinandergelegt sind und mit einem Spannelement 20 im Gehäuse 3 fixiert werden. Die Vorspannung des Spannelements 20 sorgt für eine Abdichtung der Platten untereinander und nach außen. Hier ist die Extrusionsführung 13 z.B. Teil des Gehäuses 3. Das Gehäuse 3 kann dabei beispielsweise einen ersten Gehäuseabschnitt 30 aufweisen, in dem die Platten 9, 10, 11, 12 angeordnet sind, wobei die Platten und die Extrusionsführung 13 über das Spannelement 20 im ersten Gehäuseabschnitt 30 fixiert sind. Über das Spannelement 20 können die Gehäuseteile, also hier der Gehäuseabschnitt 30 und die Extrusionsführung ebenfalls derart aneinandergepresst werden, dass das Gehäuse nach außen abgedichtet wird.

Die Platten 9, 10, 11, 12 sind austauschbar im Gehäuse 3 angeordnet. Bei diesem konkreten Ausführungsbeispiel kann durch Lösen des Spannelements 20 die Extrusionsführung 13 vom Gehäuseabschnitt 30 abgenommen werden und mindestens eine Platte des Plattensatzes ausgetauscht werden. Somit können auf einfache Art und Weise die Strukturen im Lebensmittel 2 variiert werden. Siehe hierzu auch Fig. 2.

Wie insbesondere aus der Fig. 1 hervorgeht, kann die Vorrichtung mindestens eine Einrichtung zum Zuführen des Zusatzmassestroms Z umfassen, z.B. eine Füllmaschine 13 mit einem Trichter und einem Förderwerk 26, die vorzugsweise mindestens einen Füllstromteiler 14 aufweist, der einen Zusatzmassestrom in mehrere Zusatzmasseströme Z in entsprechenden Teilleitungen 15a bis 15n aufteilt, wobei die Teilleitungen, z.B. in Form von Schläuchen, mit den Zuläufen 7a bis 7n verbunden sind. Entsprechende Füllstromteiler sind aus dem Stand der Technik bekannt und weisen jeweilige Dosierelemente 36 a bis 36 n auf, die einen vorbestimmten Volumenstrom erzeugen. Vorteilhafterweise erzeugen die Dosierelemente 36a -36n einen Volumenstrom, der in allen Teilleitungen 15a bis 15n gleich ist. Durch die Verwendung des Füllstromteilers14 ist die Zusatzmasse in den Kanälen 19 mit unterschiedlichen Strömungswiderständen zwangsgeführt und weist je Kanal 19 einen definierten über alle Kanäle 19 hinweg gleichbleibenden Volumenstrom auf. Dadurch ist das System masseunabhängig. Dies ermöglicht auch, dass unterschiedliche Platten verwendet werden können, ohne dass der Volumenstrom im Hinblick auf unterschiedliche Strömungswiderstände in den Kanälen angepasst werden muss. Das heißt auch, dass es beim Wechseln der Massen und/oder Platten keinerlei Anpassung des Systems durch den Bediener erfordert. Auf die Verwendung eines Füllstromteilers 14 kann dann verzichtet werden, wenn die Geometrie der einzelnen Kanäle 19 so definiert ist, dass die Strömungswiderstände über alle Kanäle hinweg nahezu identisch sind. Dies kann z.B. über eine simulative Untersuchung erreicht werden. Alternativ können auch Drosselventile für die jeweiligen Zuläufe vorgesehen werden, die den Volumenstrom einstellen.

Andernfalls würde die Zusatzmasse vorwiegend an den Stellen ausgestoßen werden, an denen der Strömungswiderstand gering ist.

Erfindungsgemäß können auch sehr feine Stränge und Strukturen erzeugt werden.

Wie aus Fig. 1 hervorgeht, weist die Vorrichtung auch eine Füllmaschine 100 auf mit einem Trichter 17 und einem Förderwerk 180, der über eine Leitung 35 den Grundmassestrom G der Vorrichtung 1 zuführt.

Es ist auch möglich, dass die Vorrichtung, wie sie beispielsweise in Fig. 1 gezeigt ist, mehrere Einrichtungen zum Zuführen unterschiedlicher Zusatzmassen zu unterschiedlichen Zuläufen aufweist. Somit können auch unterschiedliche Farben und weitere Strukturen durch unterschiedliche Zusatzmassen 6 erzeugt werden. Vorteilhafterweise ist das Verhältnis des Grundmassestroms G zu den jeweiligen Zusatzmasseströmen Z einstellbar, z.B. über den an der Füllmaschine 100 eingestellten Volumenstrom oder aber über den an der Füllmaschine 13 und am Füllstromteiler 14 eingestellten Volumenstrom. Die Volumenströme des Grundmassestroms G und der einzelnen Zusatzmasseströme Z können vorzugsweise derart eingestellt werden, dass die Strömungsgeschwindigkeiten des erzeugten Grundmassestrangs und der Zusatzmassestränge im Gehäuse im Wesentlichen gleich ist. Zum Erzeugen sehr dünner Strukturen kann eine verminderte Strömungsgeschwindigkeit der Zusatzmasse erforderlich sein. Dadurch wird diese in die "Länge gezogen"

Gemäß dem erfindungsgemäßen Verfahren wird ein Grundmassestrom G in ein Gehäuse 3 geleitet und in dem Gehäuse 3 in einem ersten Abschnitt 9 mindestens ein Grundmassestrang 5 erzeugt. Über mehrere Zuläufe 7, die insbesondere ringförmig um den Umfang des Gehäuses 3 verteilt sind, werden mehrere Zusatzmasseströme mehreren Kanälen 19 in einem zweiten Abschnitt 10 zugeleitet. In einem dritten Abschnitt 11 können die Zusatzmasseströme aus den Kanälen 19 über entsprechende Auslassöffnungen 28 austreten, wodurch mehrere Zusatzmassestränge erzeugt werden. Die Auslassöffnungen liegen vorzugsweise in einer Ebene, die sich senkrecht zur Strömungsrichtung in der Strukturiereinrichtung erstreckt. Vorzugsweise werden in einem vierten Abschnitt 12 die Massestränge 6 rekombiniert. Die erzeugten Grundmassestränge und Zusatzmassenstränge können nachfolgend in einer Extrusionsführung 13 zusammengefügt werden, ohne dass es Lufteinschlüsse gibt. Wie zuvor beschrieben, sind die Abschnitte 9, 10, 11, 12 von mehreren aneinander liegenden in Strömungsrichtung hintereinander angeordneten Platten ausgebildet.

Zum Erzeugen einer neuen Struktur werden diese Platten, zumindest jedoch eine der Platten, ausgetauscht.

Im Anschluss an die Vorrichtung 1 kann das Lebensmittel 2 z.B., wie in Fig. 1 dargestellt ist, über ein Förderband 23 abtransportiert werden und gegebenenfalls noch in Einzelabschnitte geschnitten werden. Es ist aber auch möglich, dass das Lebensmittel 2 in eine Wursthülle bzw. in einen Darm ausgestoßen wird. Hierzu kann in Strömungsrichtung nach der Vorrichtung 1 ein Füllrohr angeordnet sein, auf den z.B. eine Wursthülle gerafft ist und in bekannter Weise das Lebensmittel 2 in den Darm ausgestoßen wird. Bei diesem Ausführungsbeispiel kann dann auf eine komprimierende Extrusionsführung 13 verzichtet werden.

Die vorliegende Erfindung wurde im Detail mit den entsprechenden Platten 9, 10, 11, 12 beschrieben. Alternativ kann statt der einzelnen Platten ein 3D-gedrucktes Bauteil mit den entsprechenden ersten, zweiten und dritten (optional vierten) Abschnitten verwendet werden. Auch ist es möglich, dass die Platten zum Teil zusammengefasst sind, d.h. dass eine Platte mehrere Abschnitte aufweist.

Die Geometrie der Platten mit den entsprechenden Öffnungen ist kundenabhängig und kann sowohl für die Strukturierung von veganen Fleischalternativen als auch zur Formgebung von Fleischprodukten, etc. verwendet werden. Als Grundmasse kann beispielsweise Kartoffelstampf, Joghurt, Käse, etc. verwendet werden. Als Zusatzmasse kann beispielsweise Marinade, eingefärbte Lebensmittelmasse, etc. verwendet werden. Aber auch die Verwendung von weiteren pastösen Massen zur Herstellung definierter Muster oder Formen, wie Eisprodukte, Teigprodukte oder Produkte der Molkereiindustrie, ist möglich. Der Plattenstapel kann in gleicher Art und Weise erweitert werden, so dass 2 - n Zusatzmassen dem Prozess zugeführt werden können.

Fig. 7 zeigt grob schematisch einen Querschnitt durch das mit den oben beschriebenen Ausführungsbeispielen erzeugten Lebensmittel 2. Deutlich kann die Grundmasse 5 und die Zusatzmasse 6 erkannt werden die einer realitätsgetreuen Nachbildung eines Steaks entsprechen.

## Patentansprüche

1. Vorrichtung (1) zum Herstellen von strukturierten Lebensmitteln (2), insbesondere tierische Produkten und / oder Fleischersatzprodukten, die
ein Gehäuse (3) aufweist, mit einem Einlass für einen Grundmassestrom (G) und einem Auslass für das strukturierte Lebensmittel (2) und mit
einer Strukturiereinrichtung (18) zum Erzeugen einer definierten Struktur einer Zusatzmasse (6) in der Grundmasse (5) wobei die Strukturiereinrichtung umfasst:
- einen ersten Abschnitt (9), mit mindestens einer Öffnung (16) für den Grundmassestrom (G) zur Erzeugung mindestens eines Grundmassestrangs (5),
- einen zweiten Abschnitt (10) mit mehreren Kanälen (19), die mit Zuläufen (7) für jeweilige Zusatzmasseströme (Z) verbunden sind, die insbesondere um den Umfang des Gehäuses (3) verteilt sind und den Zusatzmassestrom (Z) an eine jeweilige vorbestimmte Position des Gehäusequerschnitts leiten und
- einem dritten Abschnitt (11) mit mehreren Auslassöffnungen (28), die in Verbindung mit den jeweiligen Kanälen (19) stehen um mehrere Zusatzmassestränge (6) zu erzeugen.

2. Vorrichtung (1) nach Anspruch 1, **dadurch gekennzeichnet, dass** die Vorrichtung noch einen
vierten Abschnitt (12) aufweist, mit mehreren Öffnungen (27) über die die Zusatzmassestränge (6) rekombiniert werden können.

3. Vorrichtung (1) nach Anspruch 1 oder 2, **dadurch gekennzeichnet, dass** in Strömungsrichtung betrachtet, das Gehäuse (3) nach der Strukturiereinrichtung (18) eine Extrusionsführung (13) aufweist, in der sich die Grund- und Zusatzmassestränge aneinander legen, wobei vorzugsweise die Innenkontur der Extrusionsführung (13) im Wesentlichen der Außenkontur des Lebensmittels (2) entspricht und die entweder als gerade Formstrecke mit im wesentlichen konstanter Querschnittsfläche ausgebildet ist oder als komprimierende Formstrecke, derart dass das Lebensmittel (2) nach Austritt aus der Strukturiereinrichtung (18) komprimiert wird oder als expandierende Formstrecke derart, dass das Lebensmittel (2) nach Austritt aus der Strukturiereinrichtung (18) expandieren kann.

4. Vorrichtung (1) nach mindestens einem der Ansprüche 1 bis 3, **dadurch gekennzeichnet, dass** die Abschnitte (9,10,11,12) in Form von mehreren aneinanderlegenden in Strömungsrichtung hintereinander angeordnete Platten ausgebildet sind, die vorzugsweise austauschbar im Gehäuse (3) angeordnet sind.

5. Vorrichtung (1) nach Anspruch 4, **dadurch gekennzeichnet, dass**
- der erste Abschnitt (9) als eine Matrizenplatte (9) ausgebildet ist, die die mindestens eine Öffnung (16) für den Grundmassestrom (G) aufweist,
- der zweite Abschnitt (10) als Leiterplatte (10) ausgebildet ist, die mindestens eine Öffnung (16) für den in der Matrizenplatte erzeugten wenigstens einen Grundmassestrang (5) aufweist sowie die Kanäle (19), die den Zusatzmassestrom (Z) von den Zuläufen (7) zu jeweiligen vorbestimmte Positionen im Plattenquerschnitt leiten und
- der dritte Abschnitt (11) als Auslassplatte (11) ausgebildet ist, die mindestens eine Öffnung (16) für den wenigstens einen in den vorherigen Platten erzeugten Grundmassestrang (5) sowie die mehreren Auslassöffnungen (28) aufweist, die in Verbindung mit den jeweiligen Kanälen (19) an den vorbestimmten Positionen stehen um die Zusatzmassestränge (6) zu erzeugen und vorzugsweise
- der vierte Abschnitt (12) als Formplatte (12) ausgebildet ist, die mindestens eine Öffnung (16) für den in den vorherigen Platten erzeugten mindestens einen Grundmassestrang (5) aufweist, sowie mehrere Öffnungen (27) über welche die Zusatzmassenstränge rekombiniert werden können.

6. Vorrichtung (1) nach Anspruch 4 oder 5, **dadurch gekennzeichnet, dass** die Kanäle (19) als Durchbrüche in einer Platte, insbesondere der Leiterplatte (10) gebildet sind, die durch benachbarte Platten, insbesondere die Matrizenplatte (9) und die Auslassplatte (11) von beiden Seiten geschlossen werden, wobei die Kanäle (19) vorzugsweise eine Querschnittsfläche in einem Bereich von 5 mm² bis 150 mm² aufweisen.

7. Vorrichtung (1) nach mindestens einem der Ansprüche 4 oder 5 oder 6, **dadurch gekennzeichnet, dass** die Platten, insbesondere die Matrizenplatte (9), die Leiterplatte (10) und die Auslassplatte (11), mehrere Öffnungen (16) zum Erzeugen mehrerer Grundmassestränge (5) aufweisen, wobei eine der Platten, insbesondere die Leiterplatte (10), Stege zwischen den Öffnungen (16) aufweist und die Kanäle (19) sich in den Stegen erstrecken.

8. Vorrichtung (1) nach mindestens einem der Ansprüche 1 bis 7, **dadurch gekennzeichnet, dass** die Vorrichtung (1) mindestens eine Einrichtung (13) zum Zuführen der Zusatzmasseströme (6) umfasst, die vorzugsweise mindestens einen Füllstromteiler (14) aufweist, der einen Zusatzmassestrom in mehrere Zusatzmasseströme (10) in entsprechenden Teilleitungen (15) aufteilt, wobei die Teilleitungen (15) mit den Zuläufen (7) verbunden sind.

9. Vorrichtung (1) nach mindestens einem der Ansprüche 1 bis 8, **dadurch gekennzeichnet, dass** die Vorrichtung (1) mehrere Einrichtungen zum Zuführen unterschiedlicher Zusatzmassen zu unterschiedlichen Zuläufen (7) aufweist.

10. Vorrichtung (1) nach mindestens Anspruch 4, **dadurch gekennzeichnet, dass** die Platten über ein Spannelement (20) im Gehäuse (3) fixiert werden, wobei insbesondere die Vorspannung des Spannelements (20) für die Abdichtung der Platten zueinander sorgt und wobei vorzugsweise das Gehäuse (3) einen ersten Gehäuseabschnitt (30) aufweist, in dem die Platten angeordnet sind, wobei die Platten und die Extrusionsführung (13) über das Spannelement (20) im ersten Gehäuseabschnitt (30) fixiert sind.

11. Füllmaschine (100) mit einer Vorrichtung zum Herstellen von strukturierten Lebensmitteln (2) nach mindestens einem der Ansprüche 1 bis 10, wobei die Füllmaschine (100) einen Trichter (17), ein Fördererwerk (180) und einen Auslass, der mit dem Einlass (4) der Vorrichtung verbunden ist, aufweist.

12. Füllmaschine (100) nach Anspruch 11, **dadurch gekennzeichnet, dass** das Verhältnis des Grundmassestroms (G) zu den jeweiligen Zusatzmasseströmen (Z) einstellbar ist.

13. Verfahren zum Herstellen von strukturierten Lebensmitteln (2) insbesondere mit einer Füllmaschine (100) nach Anspruch 11 oder 12, **dadurch gekennzeichnet, dass** ein Grundmassestrom in ein Gehäuse (3) geleitet wird und in dem Gehäuse (3) in einem ersten Abschnitt(9) mindestens ein Grundmassestrang (G) erzeugt wird und über mehrere Zuläufe (7), die insbesondere am Umfang des Gehäuses (3) verteilt sind mehrere Zusatzmasseströme (6) mehreren Kanälen (19) in einem zweiten Abschnitt (10) zugeleitet werden, wobei
in einem dritten Abschnitt (11) die Zusatzmasseströme (Z) aus den Kanälen (19) über entsprechende Auslassöffnungen (28) austreten, wodurch mehrerer Zusatzmassestränge (6) erzeugt werden und vorzugsweise in einem vierten Abschnitt (12) die Zusatzmassestränge (6) rekombiniert werden.

14. Verfahren nach Anspruch 13, **dadurch gekennzeichnet, dass** in Strömungsrichtung betrachtet nach der Strukturiereinrichtung (18), insbesondere nach dem dritten oder vierten Abschnitt sich die Grund-und Zusatzmassestränge in einer Extrusionsführung (13) aneinanderlegen.

15. Verfahren nach mindestens einem der Ansprüche 13 oder 14, **dadurch gekennzeichnet, dass** die Abschnitte in Form von mehreren aneinanderlegenden in Strömungsrichtung hintereinander angeordnete Platten ausgebildet sind, und die Platten zum Erzeugen einer bestimmten Struktur ausgetauscht werden.

## Geänderte Patentansprüche

### Geänderte Patentansprüche gemäss Regel 137(2) EPÜ.

1. Vorrichtung (1) zum Herstellen von strukturierten Lebensmitteln (2), insbesondere tierische Produkten und / oder Fleischersatzprodukten, die
ein Gehäuse (3) aufweist, mit einem Einlass für einen Grundmassestrom (G) und einem Auslass für das strukturierte Lebensmittel (2) und mit
einer Strukturiereinrichtung (18) zum Erzeugen einer definierten Struktur einer Zusatzmasse (6) in der Grundmasse (5) wobei die Strukturiereinrichtung umfasst:
- einen ersten Abschnitt (9), mit mindestens einer Öffnung (16) für den Grundmassestrom (G) zur Erzeugung mindestens eines Grundmassestrangs (5),
- einen zweiten Abschnitt (10) mit mehreren Kanälen (19), die mit Zuläufen (7) für jeweilige Zusatzmasseströme (Z) verbunden sind, die um den Umfang des Gehäuses (3) verteilt sind und den Zusatzmassestrom (Z) an eine jeweilige vorbestimmte Position des Gehäusequerschnitts leiten und
- einem dritten Abschnitt (11) mit mehreren Auslassöffnungen (28), die in Verbindung mit den jeweiligen Kanälen (19) stehen um mehrere Zusatzmassestränge (6) zu erzeugen, wobei
- die Abschnitte (9,10,11,12) in Form von mehreren aneinanderliegenden in Strömungsrichtung hintereinander angeordnete Platten ausgebildet sind, die vorzugsweise austauschbar im Gehäuse (3) angeordnet sind.

2. Vorrichtung (1) nach Anspruch 1, **dadurch gekennzeichnet, dass** die Vorrichtung noch einen vierten Abschnitt (12) aufweist, mit mehreren Öffnungen (27) über die die Zusatzmassestränge (6) rekombiniert werden können.

3. Vorrichtung (1) nach Anspruch 1 oder 2, **dadurch gekennzeichnet, dass** in Strömungsrichtung betrachtet, das Gehäuse (3) nach der Strukturiereinrichtung (18) eine Extrusionsführung (13) aufweist, in der sich die Grund- und Zusatzmassestränge aneinander legen, wobei vorzugsweise die Innenkontur der Extrusionsführung (13) im Wesentlichen der Außenkontur des Lebensmittels (2) entspricht und die entweder als gerade Formstrecke mit im wesentlichen konstanter Querschnittsfläche ausgebildet ist oder als komprimierende Formstrecke, derart dass das Lebensmittel (2) nach Austritt aus der Strukturiereinrichtung (18) komprimiert wird oder als expandierende Formstrecke derart , dass das Lebensmittel (2) nach Austritt aus der Strukturiereinrichtung (18) expandieren kann.

4. Vorrichtung (1) nach Anspruch 1, **dadurch gekennzeichnet, dass**
- der erste Abschnitt (9) als eine Matrizenplatte (9) ausgebildet ist, die die mindestens eine Öffnung (16) für den Grundmassestrom (G) aufweist,
- der zweite Abschnitt (10) als Leiterplatte (10) ausgebildet ist, die mindestens eine Öffnung (16) für den in der Matrizenplatte erzeugten wenigstens einen Grundmassestrang (5) aufweist sowie die Kanäle (19), die den Zusatzmassestrom (Z) von den Zuläufen (7) zu jeweiligen vorbestimmte Positionen im Plattenquerschnitt leiten und
- der dritte Abschnitt (11) als Auslassplatte (11) ausgebildet ist, die mindestens eine Öffnung (16) für den wenigstens einen in den vorherigen Platten erzeugten Grundmassestrang (5) sowie die mehreren Auslassöffnungen (28) aufweist, die in Verbindung mit den jeweiligen Kanälen (19) an den vorbestimmten Positionen stehen um die Zusatzmassestränge (6) zu erzeugen und vorzugsweise
- der vierte Abschnitt (12) als Formplatte (12) ausgebildet ist, die mindestens eine Öffnung (16) für den in den vorherigen Platten erzeugten mindestens einen Grundmassestrang (5) aufweist, sowie mehrere Öffnungen (27) über welche die Zusatzmassenstränge rekombiniert werden können.

5. Vorrichtung (1) nach Anspruch 1 oder 4, **dadurch gekennzeichnet, dass** die Kanäle (19) als Durchbrüche in einer Platte, insbesondere der Leiterplatte (10) gebildet sind, die durch benachbarte Platten, insbesondere die Matrizenplatte (9) und die Auslassplatte (11) von beiden Seiten geschlossen werden, wobei die Kanäle (19) vorzugsweise eine Querschnittsfläche in einem Bereich von 5 mm² bis 150 mm² aufweisen.

6. Vorrichtung (1) nach mindestens einem der Ansprüche 1 oder 4 oder 5, **dadurch gekennzeichnet, dass** die Platten, insbesondere die Matrizenplatte (9), die Leiterplatte (10) und die Auslassplatte (11), mehrere Öffnungen (16) zum Erzeugen mehrerer Grundmassestränge (5) aufweisen, wobei eine der Platten, insbesondere die Leiterplatte (10), Stege zwischen den Öffnungen (16) aufweist und die Kanäle (19) sich in den Stegen erstrecken.

7. Vorrichtung (1) nach mindestens einem der Ansprüche 1 bis 6, **dadurch gekennzeichnet, dass** die Vorrichtung (1) mindestens eine Einrichtung (13) zum Zuführen der Zusatzmasseströme (6) umfasst, die vorzugsweise mindestens einen Füllstromteiler (14) aufweist, der einen Zusatzmassestrom in mehrere Zusatzmasseströme (10) in entsprechenden Teilleitungen (15) aufteilt, wobei die Teilleitungen (15) mit den Zuläufen (7) verbunden sind.

8. Vorrichtung (1) nach mindestens einem der Ansprüche 1 bis 7, **dadurch gekennzeichnet, dass** die Vorrichtung (1) mehrere Einrichtungen zum Zuführen unterschiedlicher Zusatzmassen zu unterschiedlichen Zuläufen (7) aufweist.

9. Vorrichtung (1) nach mindestens Anspruch 1, **dadurch gekennzeichnet, dass** die Platten über ein Spannelement (20) im Gehäuse (3) fixiert werden, wobei insbesondere die Vorspannung des Spannelements (20) für die Abdichtung der Platten zueinander sorgt und wobei vorzugsweise das Gehäuse (3) einen ersten Gehäuseabschnitt (30) aufweist, in dem die Platten angeordnet sind, wobei die Platten und die Extrusionsführung (13) über das Spannelement (20) im ersten Gehäuseabschnitt (30) fixiert sind.

10. Füllmaschine (100) mit einer Vorrichtung zum Herstellen von strukturierten Lebensmitteln (2) nach mindestens einem der Ansprüche 1 bis 9, wobei die Füllmaschine (100) einen Trichter (17), ein Fördererwerk (180) und einen Auslass, der mit dem Einlass (4) der Vorrichtung verbunden ist, aufweist.

11. Füllmaschine (100) nach Anspruch 10, **dadurch gekennzeichnet, dass** das Verhältnis des Grundmassestroms (G) zu den jeweiligen Zusatzmasseströmen (Z) einstellbar ist.

12. Verfahren zum Herstellen von strukturierten Lebensmitteln (2) insbesondere mit einer Füllmaschine (100) nach Anspruch 10 oder 11, **dadurch gekennzeichnet, dass** ein Grundmassestrom in ein Gehäuse (3) geleitet wird und in dem Gehäuse (3) in einem ersten Abschnitt(9) mindestens ein Grundmassestrang (G) erzeugt wird und über mehrere Zuläufe (7), die am Umfang des Gehäuses (3) verteilt sind mehrere Zusatzmasseströme (6) mehreren Kanälen (19) in einem zweiten Abschnitt (10) zugeleitet werden, wobei
- in einem dritten Abschnitt (11) die Zusatzmasseströme (Z) aus den Kanälen (19) über entsprechende Auslassöffnungen (28) austreten, wodurch mehrerer Zusatzmassestränge (6) erzeugt werden v wobei
die Abschnitte (9,10,11,12) in Form von mehreren aneinanderliegenden in Strömungsrichtung hintereinander angeordnete Platten ausgebildet sind, die vorzugsweise austauschbar im Gehäuse (3) angeordnet sind.

13. Verfahren nach Anspruch 12, **dadurch gekennzeichnet, dass** in einem vierten Abschnitt (12) die Zusatzmassestränge (6) rekombiniert werden.

14. Verfahren nach Anspruch 12 oder 13, **dadurch gekennzeichnet, dass** in Strömungsrichtung betrachtet nach der Strukturiereinrichtung (18), insbesondere nach dem dritten oder vierten Abschnitt sich die Grund-und Zusatzmassestränge in einer Extrusionsführung (13) aneinanderlegen.
